# EUROPEAN PATENT APPLICATION

(11) **EP 2 164 062 A1**
(43) Date of publication of application: **17.03.2010**
(21) Application number: 08752861.8
(22) Date of filing: 16.05.2008
(51) Int. Cl.: G09G 3/36, B60K 35/00, G02F 1/133, G09G 3/20, G09G 3/34, G09G 5/00

(54) **DISPLAY DEVICE**

(30) Priority: 30.05.2007 JP 2007143005
(71) Applicant: Nippon Seiki Co., Ltd., Nagaoka-shi, Niigata 940-8580 (JP)
(72) Inventor: SUZUKI, Satoshi, / (JP); SEKI, Norio, / (JP)
(74) Representative: Jackson, Richard Eric
(86) International application number: PCT/JP2008/059010
(87) International publication number: WO 2008/146618

(57) **Abstract**

A display device is provided that can eliminate feeling of discomfort of a user while preventing cost from being increased. The display device includes display means 1, control means 3 that causes the display means 1 to display predetermined display information and updates the display information at a predetermined display update cycle (timing), illumination means 2 that illuminates the display means 1, and dimming means 4 that changes brightness of the illumination means 2. The control means 3 chooses the brightness of the illumination means 2 on the basis of input information from the dimming means 4 and changes the brightness of the illumination means 2 at a timing corresponding to the display update cycle for updating the display information.

## Description

### [Technical Field]

The present invention relates to a display device to be used in, for example, various kinds of vehicles and particularly to a display device in which brightness of display means can be changed.

### [Background Art]

As such display devices, for example, a display device described in a patent document 1 has been known. The display device includes display means made of a liquid crystal panel, control means formed of a microcomputer that causes the display means to display predetermined display information and updates the display information at a predetermined timing, illumination means formed of a backlight for illuminating the display means, and dimming means that changes brightness of the illumination means. The control means changes the brightness of the illumination means on the basis of input information from the dimming means.
[Patent Document 1] JP-A-2001-277905

### [Disclosure of the Invention]

### [Problems that the Invention is to Solve]

Meanwhile, an image drawing process for displaying predetermined display information on display means needs a certain time period for processing. As a result, an update cycle (timing), for example, 100 ms may be necessary for the display information. In such a display device whose update cycle is long, a problem arises when the dimming means is operated in response to ambient brightness, change of brightness made by the illumination means is ahead of the display information, so that a user may feel discomfort. In addition, as a method for solving the above mentioned problem, using of a microcomputer having a high performance is considerable. However, the cost may increase due to the use of the microcomputer.

In view of the above problem, the present invention provides a display device capable of eliminating feeling of discomfort of a user while preventing the cost from increasing.

### [Means for solving the Problems]

In order to achieve the above purpose, a display device according to the invention includes display means, control means that causes the display means to display predetermined display information and updates the display information at a predetermined timing, illumination means that illuminates the display means or another display means disposed at a periphery of the display means, and dimming means that changes brightness of the illumination means. The control means chooses the brightness of the illumination means on the basis of input information from the dimming means and changes the brightness of the illumination means at a timing in response to the timing for updating the display information.

The control means according to the invention performs first processing for determining a dimming level by the dimming means and second processing for making output of controlling the brightness of the illumination means to be coincident with the timing at a time after a predetermined time period has elapsed from the first processing on the basis of the dimming level determined by the first processing.

### [Advantage of the Invention]

In accordance with the invention, the initial purpose can be achieved, and it is possible to provide the display device capable of eliminating feeling of discomfort of a user while preventing the cost from being increased.

### [Brief Description of the Drawings]

[Fig. 1] Fig. 1 is a block diagram showing a system structure of a display device according to an embodiment of the invention.
[Fig. 2] Fig. 2 is a timing diagram showing an operation of the embodiment.

### [Description of Reference Numerals and Signs]

- 1: display means,
- 11: illumination means,
- 3: control means,
- 4: dimming means,
- t1, t2, t3, t4, t5: clock time

### [Best Mode for Carrying Out the Invention]

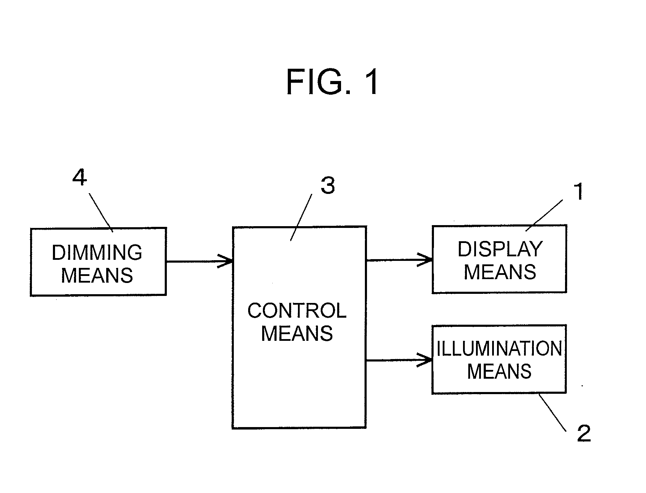

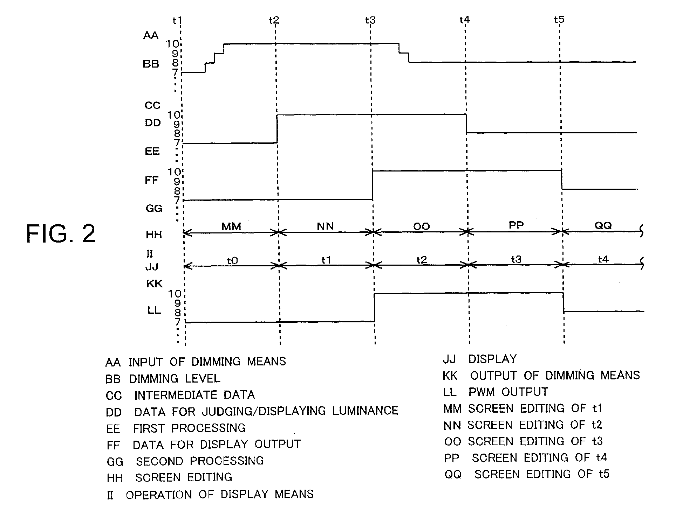

Figs. 1 and 2 are schematic views showing an embodiment of the invention. Fig. 1 is a block diagram showing a system structure of a display device according to the invention, and Fig. 2 is a timing diagram showing operations of the embodiment.

In Fig. 1, the display device according to the embodiment is built in a meter apparatus installed in, for example, a vehicle, and displays traveling information such as a travel distance, a vehicle speed, navigation, traffic information or the like, or vehicle information indicative of warning or notice of a state of each section of the vehicle. The display device includes display means 1, illumination means 2, control means 3 and dimming means 4.

The display means 1 can be formed of a flat display panel constituted by, for example, a dot matrix type liquid crystal panel.

The illumination means 2 can be formed of a surface light source device constituted by a light source having, for example, a plurality of light emitting diodes and a light guide for guiding the light from the light source to the display means 1.

The control means 3 can be formed of a microcomputer and is connected to various devices of the vehicle via CAN (Controller Area Network) communication cables or wires (not shown). The control means 3 receives an input signal relating to the travel information or the vehicle information (hereinafter, entirely referred to as display information), causes the display means 1 to display the display information in accordance with the input signal, and updates the display information at a predetermined timing (an update cycle). Further, the control means 3 receives a dimming signal relating to dimming information from the dimming means and controls the brightness of the illumination means 2.

In addition, the control means 3 includes a CPU for performing arithmetic processing on the basis of various information, a storage section having a readable, rewritable RAM for temporarily storing results of the arithmetic processing or the like by the CPU and a ROM storing a control program or control data, and an input/output interface that is connected to a bus so as to communicate the various information, a control signal, a clock signal or a latch signal.

The dimming means 4 can be formed of, for example, a rotary encoder or a potentiometer. When a user carries out a rotational operation of a knob (not shown), the dimming means 4 outputs a dimming signal (a pulse signal) according to the rotational operation of the knob to the control means 3 as the dimming information. The control means 3 changes the brightness of the illumination means 2 in accordance with the input dimming signal.

Next, an example of the operation of the display device according to the embodiment will be described with reference to Fig. 2. In Fig. 2, a horizontal axis designates lapse of time and clock times t1, t2, t3 etc. indicate a display update cycle of the display information controlled by the control means 3. The control means 3 receives the input signal and performs the arithmetic processing for the input signal. The control means 3 updates the display information (a display content) to be displayed on the display means 1 at the display update cycle of the clock times t1, t2, t3 etc., receives the dimming signal and performs the arithmetic processing for the dimming signal so as to determine a dimming level at that time, thereby controlling the brightness of the illumination means 2 in response to the display update cycle of the clock times t1, t2, t3, etc. Note that, one cycle of the display update cycle is set to be, for example, 100 ms.

To be specific, setting of a luminance (the brightness) of the dimming means 4 at the clock time t1 is performed so as to set the luminance to be a dimming level of "7" in the dimming levels of "1" to "10" (each of the numerals designates the brightness).

The control means 3 acquires data for judging/displaying a luminance (first intermediate data) to be display data having the dimming level of "7" as the display information at the clock time t1 on the basis of the dimming signal and the input signal at the clock time t1, and stores the data (first processing). The data for judging/displaying the luminance acquired and stored as in the above is used in display/output processing at the next clock time t2 as data for display output (second intermediate data). Consequently, the data for display output at the clock time t1 is made to be the data for judging/displaying the luminance at the clock time t0 that is one cycle before the clock time t1.

In addition, the control means 3 executes processing for drawing an image (screen editing processing) of the display information at the clock time t1 on the basis of the data for judging/displaying the luminance acquired at the clock time t1. During the processing for drawing, the display means 1 is in a screen editing state and the display information based on the data for display output at the clock time t1 (the data for judging/displaying the luminance at a clock time one cycle before the clock time t1) is displayed on a display screen of the display means 1.

Further, in addition, the control means 3 outputs a PWM signal corresponding to the dimming level of "7" on the basis of the data for display output at the clock time t1 so that the brightness of the illumination means 2 is adjusted to be in a level corresponding to the dimming level of "7".

Next, in the clock time t2, the setting of the luminance (the brightness) of the dimming means 4 is performed so as to set the luminance to be the dimming level of "10" that is greater than the dimming level of "7" at the clock time t1 by 3 steps.

The control means 3 acquires data for judging/displaying the luminance (first intermediate data) to be display data having the dimming level of "10" as the display information at the clock time t2 on the basis of the dimming signal and the input signal at the clock time t2, and stores the data (first processing). The data for judging/displaying the luminance acquired and stored as in the above is used for display/output processing (processing for outputting a result of the screen editing on the display means 1) at the next clock time t3 as data for display output (second intermediate data). Consequently, the data for display output at the clock time t2 is made to be the data for judging/displaying the luminance at the clock time t1.

In addition, the control means 3 executes processing for drawing an image (screen editing processing) of the display information at the clock time t2 on the basis of the data for judging/displaying the luminance acquired at the clock time t2. During the processing for drawing the image, the display information based on the data for display output (the data for judging/displaying the luminance at the clock time t1) at the clock time t2 is displayed on the display screen of the display means 1.

Further, in addition, the control means 3 outputs a PWM signal corresponding to the dimming level of "7" the same as that at the clock time t1 on the basis of the data for display output at the clock time t2 so that the brightness of the illumination means 2 is maintained to be in the dimming level of "7".

Next, in the clock time t3, the setting of the luminance (the brightness) of the dimming means 4 is performed so as to set the luminance to be the dimming level of "10" that is the same as that at the clock time t2.

The control means 3 acquires data for judging/displaying the luminance (first intermediate data) to be display data having the dimming level of "10" as the display information at the clock time t3 on the basis of the dimming signal and the input signal at the clock time t3, and stores the data (first processing). The data for judging/displaying the luminance acquired and stored as in the above is used for display/output processing at the next clock time t4 as data for display output (second intermediate data). Consequently, the data for display output at the clock time t3 is made to be the data for judging/displaying the luminance at the clock time t2.

In addition, the control means 3 executes processing for drawing an image (screen editing processing) of the display information at the clock time t3 on the basis of the data for judging/displaying the luminance acquired at the clock time t3. During the processing for drawing, the display information based on the data for display output at the clock time t3 (the data for judging/displaying the luminance at the clock time t2) is displayed on the display screen of the display means 1.

Further, in addition, the control means 3 outputs a PWM signal corresponding to the dimming level of "10" on the basis of the data for display output at the clock time t3 so that the brightness of the illumination means 2 is adjusted to be in a level corresponding to the dimming level of "10".

Here, the setting of the luminance of the dimming means 4 is performed so as to change the dimming level of "7" of the dimming means 4 at the clock time t1 to the dimming level of "10" at the clock time t2. However, a timing that the brightness of the illumination means 2 is actually changed in accordance with the change of setting (the setting of the luminance of the dimming means 4 is reflected to the illumination means 2), is an update timing of the clock time t3 that is one cycle (a predetermined time period) after from the clock time t2.

Next, in the clock time t4, the setting of the luminance (the brightness) of the dimming means 4 is performed so as to set the luminance to be the dimming level of "8" that is smaller than that at the clock time t3 by 2 steps.

The control means 3 acquires data for judging/displaying the luminance (first intermediate data) to be display data having the dimming level of "8" as the display information at the clock time t4 on the basis of the dimming signal and the input signal at the clock time t4, and stores the data (first processing). The data for judging/displaying the luminance acquired and stored as in the above is used for display/output processing at the next clock time t5 as data for display output (second intermediate data). Consequently, the data for display output at the clock time t4 is made to be the data for judging/displaying the luminance at the clock time t3.

In addition, the control means 3 executes processing for drawing an image of the display information at the clock time t4 on the basis of the data for judging/displaying the luminance acquired at the clock time t4. During the processing for drawing, the display means 1 is in a screen editing state and the display information based on the data for display output at the clock time t4 (the data for judging/displaying the luminance at the clock time t3) is displayed on the display screen of the display means 1.

Further, in addition, the control means 3 outputs a PWM signal corresponding to the dimming level of "10" on the basis of the data for display output at the clock time t4 so that the brightness of the illumination means 2 is maintained to be in a level corresponding to the dimming level of "10".

Next, in the clock time t5, the setting of the luminance (the brightness) of the dimming means 4 is performed so as to set the luminance to be the dimming level of "8" that is the same as that at the clock time t4.

The control means 3 acquires data for judging/displaying the luminance (first intermediate data) to be display data having the dimming level of "8" as the display information at the clock time t5 on the basis of the dimming signal and the input signal at the clock time t5, and stores the data (first processing). The data for judging/displaying the luminance acquired and stored as in the above is used for display/output processing at the next clock time as data for display output (second intermediate data). Consequently, the data for display output at the clock time t5 is made to be the data for judging/displaying the luminance at the clock time t4.

In addition, the control means 3 executes processing for drawing an image (screen editing processing) of the display information at the clock time t5 on the basis of the data for judging/displaying the luminance acquired at the clock time t5. During the processing for drawing, the display means 1 is in a screen editing state and the display information based on the data for display output at the clock time t5 (the data for judging/displaying the luminance at the clock time t4) is displayed on the display screen of the display means 1.

Further, in addition, the control means 3 outputs a PWM signal corresponding to the dimming level of "8" on the basis of the data for display output at the clock time t5 so that the brightness of the illumination means 2 is adjusted to be a level corresponding to the dimming level of "8".

The setting of the luminance of the dimming means 4 is performed so as to change the dimming level of "10" of the dimming means 4 at the clock time t3 to the dimming level of "8" at the clock time t4. However, a timing that the brightness of the illumination means 2 is actually changed in accordance with the change of setting (the setting of the luminance of the dimming means 4 is reflected to the illumination means 2), is an update timing of the clock time t5 that is one cycle (a predetermined time period) after the clock time t4.

As described above, the display device of the embodiment includes the display means 1, the control means 3 that causes the display means 1 to display predetermined display information and updates the display information at a predetermined display update cycle (timing), the illumination means 2 that illuminates the display means 1, and the dimming means 4 that changes the brightness of the illumination means 2. In the display device, the control means 3 chooses the brightness of the illumination means 2 on the basis of input information from the dimming means 4 and changes the brightness of the illumination means 2 at the timing corresponding to the display update cycle for updating the display information. As a result, it is possible to eliminate feeling of discomfort of a user while preventing the cost from increasing.

Namely, since the brightness of the illumination means 2 is changed at the timing corresponding the display update cycle for updating the display information, it is possible to make the timing for the display updating to be coincident with the timing for changing the brightness of the illumination means 2. As a result, even when an expensive control means having a high image drawing performance is not used, it is possible to eliminate the problem that the change of the brightness of the illumination means 2 is precedent to the timing for display updating, resulting in giving feeling of discomfort to a user.

In the embodiment, the control means 3 executes the first processing in which the dimming level for the dimming means 4 is determined at the timing corresponding to the display update cycle (display update timing) and the second processing in which the output of the PWM signal for controlling the brightness of the illumination means 2 is made to be coincident with the timing after one cycle has elapsed (a predetermined time period has elapsed) from the first processing on the basis of the dimming level determined by the first processing. As a result, it is possible to facilitate producing of a program and to reduce the cost.

While the rotary encoder or the potentiometer is used for the dimming means 4 in the embodiment, there are no restrictions on the dimming means 4 as long as it can be a trigger for changing the brightness of the illumination means 2 so that an up/down switch or a light switch capable of changing the brightness of the illumination means 2 in association with an on/off operation of a headlight can be used.

In the embodiment, while the illumination means 2 is adapted to illuminate the display means 1, means that illuminates any other display means (for example, a meter apparatus) disposed at a periphery of the display means 1 may also be applicable. In the above case, since the display update cycle (timing) of the display means 1 is coincident with a luminance change timing of another display means, it is possible to obtain an advantage similar to that of the embodiment.

### [Applicability in Industrial Field]

The invention can be applied to display devices used in, for example, various kinds of vehicles.

## Claims

1. A display device comprising:
display means;
control means that causes the display means to display predetermined display information and updates the display information at a predetermined timing;
illumination means that illuminates the display means or another display means disposed at a periphery of the display means; and
dimming mean that changes brightness of the illumination means,
wherein the control means chooses the brightness of the illumination means on the basis of input information from the dimming means and changes the brightness of the illumination means at a timing in response to the timing for updating the display information.

2. The display device according to claim 1, wherein the control means performs first processing for determining a dimming level by the dimming means and second processing for making output of controlling the brightness of the illumination means to be coincident with the timing at a time after a predetermined time period has elapsed from the first processing on the basis of the dimming level determined by the first processing.
